**Europäisches Patentamt**

**European Patent Office**

**Office européen des brevets**

(19)

(11) Publication number: **0 040 647**
A1

# EUROPEAN PATENT APPLICATION

(12)

(21) Application number: **80107967.4**

(22) Date of filing: **17.12.80**

(51) Int. Cl.³: **B 60 K 41/26,** B 60 T 11/10

(30) Priority: **27.05.80 US 153797**

(43) Date of publication of application: **02.12.81**
**Bulletin 81/48**

(84) Designated Contracting States: **BE DE FR**

(71) Applicant: **CATERPILLAR TRACTOR CO., 100 Northeast Adams Street, Peoria Illinois 61629 (US)**

(72) Inventor: **Abdel-Fattah Abdel-Latif, Mohamed, 2100 Best Place, Aurora Illinois 60506 (US)**

(74) Representative: **Wagner, Karl H., P.O. Box 246 Gewuerzmuehlstrasse 5, D-8000 München 22 (DE)**

(54) **Parking brake and transmission interlock system.**

(57) An interlock system (10) contains an interlock valve (18) which reacts when fluid pressure is insufficient to disengage the parking brake (20). The valve (18) senses the loss of pressure and causes a plunger to interfere with the movement of a control rod (40) which moves to shift the transmission (16). This interference results in noticeable resistance to the movement of the control rod (40). The vehicle can then be moved with the parking brake (20) engaged but an operator will be alerted that the parking brake (20) is engaged to prevent damage to the brake (20).

0040647

## Description

## Parking Brake and Transmission Interlock System

## Technical Field

This invention pertains to a parking brake and transmission interlock system in which the parking brake and transmission are interconnected via an interlock valve assembly which offers noticeable resistance to an operator attempting to shift the transmission with the parking brake engaged.

## Background Art

Large heavy-duty vehicles, such as earth-working vehicles, are equipped with some form of parking brake to prevent the vehicle from moving or rolling down an incline or the like when the vehicle is unattended or not in operation. The parking brake is normally spring-applied and fluid pressure released. Thus, the parking brake is normally engaged when the vehicle is shut down or there is a loss of control pressure within the vehicle. The brake normally remains engaged until sufficient control pressure is developed to disengage the parking brake.

The control pressure is supplied by a fluid, such as compressed air for example, which is pressurized and stored while the engine is running. Thus, it is sometimes necessary to run the engine several minutes to build sufficient pressure to release the parking brake. Most systems are provided with some form of warning device such as buzzers or flashing lights to warn the operator that the fluid pressure is too low to release the brakes. However, should the warning buzzers fail or the operator does not notice the lights, the vehicle may be driven with the parking brakes engaged which can damage the parking brakes making them ineffective. The vehicle transmission is typically automatically shifted to neutral when the parking brakes are applied and manually shifted to a forward or reverse drive position by an operator when it is desired to move the vehicle.

There are times, however, when it would be advantageous to move the vehicle, such as to a repair shop or other service area, if control pressure is lost.

U.S. Patent No. 3,978,946 which issued on September 7, 1976 to Michael D. Ream discloses a parking brake system with transmission interlock means. If it becomes necessary to move the machine to a service area for repair, manual operations can be performed which allows the transmission to be used to move the machine. However, the interlock valve of this system is complex requiring six or more machined bores and a complicated fluid conduit system.

U.S. Patent No. 3,972,398 which issued on August 3, 1976 to Richard W. Chamberlin discloses a parking brake interlock system which includes detent means responsive to a loss of pressure in the brake releasing hydraulic pressure system for causing the detent mechanism to engage and resist movement of a transmission control member of the vehicle transmission. This system thereby alerts the operator that the parking brake is still engaged while allowing the vehicle to be moved. However, the housing for the interlock valve is bulky and the internal components of the interlock valve are numerous. Also, the interlock valve is partially hydraulically operated requiring several passages for hydraulic fluid as well as seals to contain the fluid.

The present invention is directed to overcoming one or more of the problems as set forth above.

## Disclosure of the Invention

In one aspect of the invention an apparatus comprises a housing having an opening. A control rod is positioned in the opening and movable therein from a first position to at least a second position. A sleeve having an indentation is positioned about the control rod inside the housing and movable therewith. A plunger is engageable with the indentation and blocks movement of the sleeve when so engaged. Means are provided for engaging and disengaging the plunger. A single biasing means offers noticeable resistance to movement of the control rod from the first position to the second position when the plunger is engaged with the sleeve indentation.

Prior interlock valves were bulky with complex mechanical and hydraulic parts. The interlock valve described in U.S. Patent No. 3,978,946 has numerous hydraulic lines which occupy limited space on the vehicle. U.S. Patent No. 3,972,398 describes an interlock valve which has numerous spring, balls and moving parts as well as requiring hydraulic fluid for operation. The present invention provides an apparatus which is simple in construction which does not require hydraulic fluid for operation.

## Brief Description of the Drawings

Fig. 1 is a schematic diagram of a parking brake and transmission interlock system incorporating an interlock valve assembly;

Fig. 2 is a sectional view of the interlock valve assembly taken along line II-II of Fig. 1 and emphasizing a linkage assembly; and

Fig. 3 is a sectional view of the interlock valve assembly taken along line III-III of Fig. 1.

Best Mode For Carrying Out the Invention

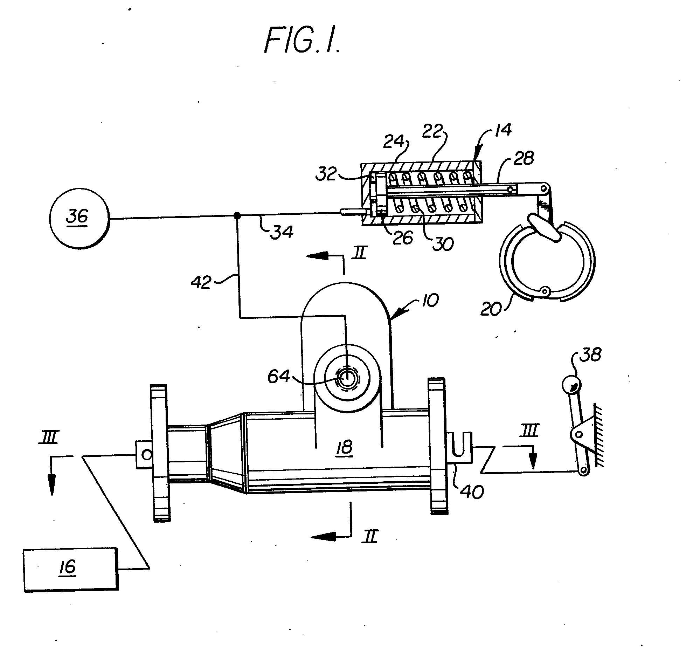

Referring to Fig. 1 of the drawings, a parking brake and transmission interlock system 10 for a vehicle, not shown, such as a wheel loader for example, includes a brake system 14, a transmission 16, and an interlock valve assembly 18 connected to the transmission 16 and brake system 14.

The brake system 14 includes the usual friction elements 20 having a suitable spring-actuator 22 for automatically engaging the friction elements 20. The spring-actuator 22 comprises a cylinder 24 having a piston 26 reciprocally mounted therein with a piston rod 28 or other suitable mechanism linked to the friction elements 20. A spring 30 mounted within the cylinder 24 acts on the piston 26 to bias the piston 26 to one end of the cylinder 24 and thereby engages the friction elements 20. In this condition the brakes of the system 14 are said to be engaged, on, or applied, as is shown in Fig. 1.

The brakes are released by introducing fluid at or above a preselected minimum or threshold pressure into a chamber 32 formed at the head end of piston 26 within the cylinder 24. Fluid is introduced into the chamber 32 by fluid line or conduit 34 from a suitable source such as a pump 36 or the like. A source of pressurized fluid may be from any suitable source of fluid on the vehicle such as transmission control or implement control. Alternately, the brake system 14 may have its own fluid control system. The pressurized fluid may be any suitable type of fluid such as hydraulic fluid or it may be a pressurized gas such as air.

The transmission 16 is interconnected with a suitable operator control member or lever 38 by means of a suitable linkage arrangement including a transmission control rod or member 40 which is part of the interlock valve 18.  The interlock valve assembly 18 interconnects to the above-described brake system 14 via conduit 42 and transmission 16 via control rod 40.  The interlock valve 18 responds to pressure in conduit 42 below the threshold pressure by offering noticeable resistance to movement of control rod 40 which is felt at the control lever 38 when the operator shifts the transmission 16 from neutral to forward or reverse drive.  This alerts the operator that the brake is engaged as shown in Fig. 1.

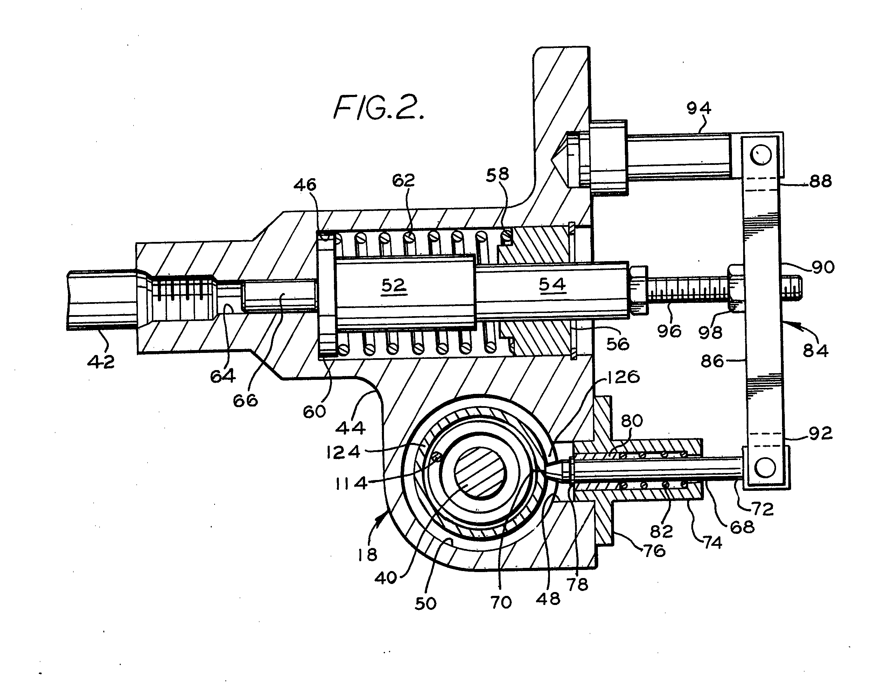

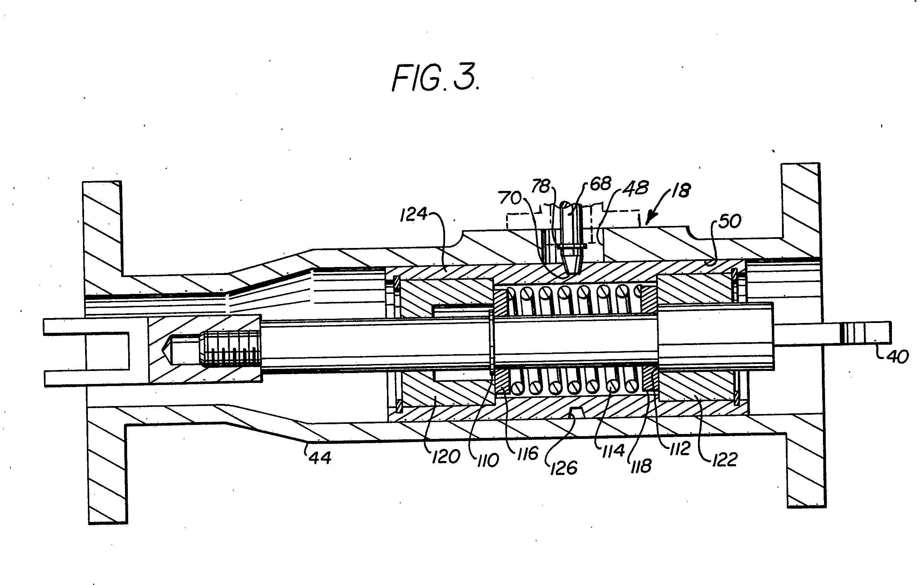

Referring to Figs. 2 and 3, the interlock valve assembly 18 has a housing 44 with first, second and third bores 46, 48 and 50.  The first and second bores 46,48 are conveniently shown parallel to each other and perpendicular to the third bore 50 which is intersected by the second bore 48 (Fig. 2).  As will be more fully explained hereinafter the first and second bores 46,48 need not be parallel to each other and need not be perpendicular to the third bore 50.

As shown in Fig. 2, a piston 52 is positioned in the first bore 46 with an end portion 54 of the piston 52 protruding out of the housing 44.  The end portion 54 preferably has a smaller diameter than the remainder of the piston 52 so that a sleeve 56 having a shoulder 58 can be fitted about the end portion 54 of the piston 52 inside the first bore 46.  The piston 52 has an end cap portion 60 which is larger than the remainder of the piston 52 and which is positioned inside the first bore 46.  A spring 62 is coiled about the piston 52 between the sleeve 56 and the end cap 60.

The piston 52 is slidably movable in the first bore 46 from a first position to a second position.  At the first position the piston 52 is retracted in the bore 46 and the end portion 54 extends from the housing 44 a first preselected amount as shown in Fig. 2.  At the second position, the piston 52 is extended or displaced towards the sleeve 56 and the end portion 54 extends from the housing 44 a second preselected amount greater than the first preselected amount. Thus, at the first position, shown in Fig. 2, the end portion 54 extends a certain distance from the housing 44 and extends a greater distance at the second position, not shown.

A fluid passageway 64 connects the parking brake system 14 via conduit 42 to the valve assembly 18. A slug 66 is positioned in the fluid passageway 64 and slidably movable therein. Fluid pressure from the pump 36 acting on the slug 66 causes the slug 66 to push against the end cap 60 of the piston 52. When fluid pressure reaches the threshold value, the force of spring 62, among other things, is overcome and the piston 52 moves from the first position shown in Fig. 2 to the second position. Similarly, when fluid pressure drops below the threshold value, the piston 52 returns to the first position.

The slug 66 is appropriately sized or sized and sealed so that it functions without leaking the fluid pressure. Alternately, a seal could be used with the piston 52 without the need for the slug 66 or the slug 66 could be made part of the piston 52.

Referring to Fig. 2, a plunger 68 has a first end portion 70 and a second end portion 72 and is linked to the piston 52 and movable in the second bore 48 between a first, engaged position and a second position. At the first, engaged position as shown in Fig. 2, the first end portion 70 of the plunger 68 protrudes through the second bore 48 into the third bore 50 and engages a sleeve 124 associated with the control rod 40 as will be more fully explained hereinafter. At the second position, the first end portion 70 is positioned inside the second bore 48.  The piston 52 and plunger 68 are linked so that the plunger 68 is at the first, engaged position when the piston 52 is at the first position and the plunger 68 is at the second position when the piston is at the second position.  The piston 52 and plunger 68 are shown in their first, engaged positions in Fig. 2 which are their positions when the brakes 20 are engaged as shown in Fig. 1.

The plunger 68 is positioned inside a housing 74 which is connected to the interlock valve housing 44 about the second bore 48.  The plunger housing 74 is preferably threadably connected to the main housing 44 but can be connected by other means such as a press fit. A shoulder 76 on the plunger housing 74 limits the intrusion of the housing 74 into the second bore 48 and helps maintain the bias on the plunger 68.

A snap ring 78 on the plunger 68 and a sleeve 80 concentrically positioned about the plunger 68 are used to maintain a biasing means, such as a coil spring 82, positioned within the plunger housing 74.

The spring 82 biases the plunger 68 towards the first, engaged position and also biases the piston 52 towards the first position.  Thus, the threshold pressure in the fluid passageway 64 must overcome the forces exerted by both springs 62 and 82 in order to move the piston 52 from the first position shown in Fig. 2 to the second position.  The force exerted by the spring 62 is greater than the force exerted by the spring 82, engaged position until fluid pressure reaches the threshold level.  The spring 62 functions primarily to urge the piston 52 towards the first position to establish a force sufficient to prevent movement of the plunger 68 until the brake pressure has reached a value to release the brakes.

Referring to Fig. 2, the piston 52 and plunger 68 are linked by a linkage assembly 84 which includes a rigid bar 86 having a first end portion 88, a middle portion 90 and a second end portion 92. Preferably, the first end portion 88 is pivotally connected to a rigid member 94 which is fastened to the housing 44. Alternately, the housing 44 may define a protrusion to which the first end portion 88 may be pivotally connected. The rigid member 94 is preferable since it can be removably fastened to the housing 44 to aid assembly and disassembly.

A contactor 96 is positioned to engage the middle portion 90 of the rigid bar 86 and the end 54 of the plunger 52. The contactor 96 is preferably a bolt or other thread member which can be fitted with a nut 98 for adjustment. The spring 82 urges the plunger 68 into engagement with sleeve 124 and holds the bar 86 in engagement with the contactor 96. The spring 82 having a lower biasing force than the spring 62 reduces the force on the plunger 68 as it contacts the sleeve 124.

The second end portion 92 of the rigid bar 86 is pivotally connected to the second end portion 72 of the plunger 68. By this construction, as the piston 52 moves from its first position as shown to its second position, the linkage assembly 84 acts to move the plunger 68 from its first position as shown to its second position. It is readily seen that by appropriately angling the rigid member 86, the first and second bores 46 and 48 can be oriented other than parallel to each other. Also, the second bore 48 can be other than perpendicular to the third bore 50.

Referring to Figs. 1 and 3, the transmission control rod 40 is positioned in the third bore 50 of the housing 44 and the first end portion 70 of the plunger 68 is positioned in the second bore 48 and, being shown in the first position, the first end portion 70 intrudes into the third bore 50. The control rod 40 has appropriate slots, and openings for connection to the operator control lever 38 and the transmission 16. The control rod 40 is movable from a first position at which the transmission 16 is in neutral as shown in Fig. 3 to at least a second position at which the transmission 16 is in forward or reverse drive.

Referring to Fig. 3, the control rod 40 has a first shoulder 110 and a second shoulder 112 and a single biasing element, such as a spring 114, is coiled about the control rod 40 and positioned between the shoulders 110 and 112. The shoulders 110 and 112 can be true shoulders formed at the intersection of two different diameters of the rod 40 or can be ridges formed on the rod 40. The purpose of the shoulders 110 and 112 is to support first and second washers 116 and 118 which abut the respective first and second shoulders 110 and 112 and the spring 114 which is positioned along the rod 40 between the washers 116 and 118.

First and second collar assemblies 120 and 122 are positioned in the third bore 50 abutting the first and second washers 116 and 118, respectively. The collar assemblies 120 and 122, spring 114, washers 116 and 118, and the shoulders 110 and 112 are contained within a sleeve 124.

The sleeve 124 contains a groove, notch, bore, slot or indentation 126 and is concentrically positioned about the control rod 40 and inside the third bore 50. At the first, engaged position of the plunger 68 as shown in Figs. 2 and 3, the first end portion 70 engages the indentation 126 and prevents movement of the sleeve 124 with the control rod 40. At the second position of the plunger 68, not shown, the first end portion 70 does not engage the indentation 126 and the sleeve 124 is free to move with the control rod 40.

When the plunger 68 engages the indentation 126, the control rod 40 is free to move but such movement is against the force of the spring 114. When moving from the neutral position shown to forward drive, the control rod 40 moves to the right, for example, which causes the shoulder 110 to push against the washer 116 and compress the spring 114 which is held against the washer 118, shoulder 112 and collar 122. Shifting to reverse drive causes the reverse to happen to compress the spring 114. The spring 114 provides sufficient resistance to alert the operator that the plunger 68 is at the first, engaged position which means that the piston 52 is at the first position which means that the fluid pressure is below the threshold pressure and the brakes 20 are engaged.

As shown in Figs. 1-3 and as above described, the interlock valve is a substitute for present production interlock valves as described in U.S. Patent No. 3,972,398 and is a streamlined, compact replacement for such valves.

Industrial Applicability

At the beginning of a work cycle, an operator boards the vehicle which, after being idle, has its brakes 20 applied and its transmission 16 in the first or neutral position (Fig. 1). The operator starts the engine and attempts to release the brakes 20 which will release only if the fluid pressure from the pump 36 is at or above the threshold level.

When the fluid pressure in conduit 34 is at or above the threshold level, the pressure acts on the piston 26 and moves the piston rod 28 to the right (Fig. 1) causing the friction elements 20 to disengage thereby releasing the brakes. At the same time the fluid pressure acts on the slug 66 through conduit 42 and fluid passageway 64 (Fig. 2). Since the fluid pressure is at or above the threshold level, the slug 66 moves the piston 52 from its first position as shown in Fig. 2 to its second position against the force of springs 62 and 82. The piston 52 acts on the linkage assembly 84 causing the rigid bar 86 to pivot about its first end portion 88 at the connection of the first end portion 88 to the rigid member 94.

As the rigid bar 86 pivots, the second end portion 92 of the bar 86 pulls the first end 70 of the plunger 68 out of the third bore 50 and out of engagement with the sleeve indentation 126 (Fig. 2). The sleeve 124 is free to move with the transmission control rod 40 when the operator moves the control lever 38 to shift from neutral to forward or reverse drive.

When the fluid pressure in conduit 34 is below the threshold level, the friction elements 20 remain engaged and the brakes remain on. The fluid pressure in conduit 42 and fluid passageway 64 is insufficient to move the slug 66 and piston 52, so, the spring 62 biases the piston 52 to its first position.

The plunger spring 82 urges the first end 70 of the plunger 68 into the third bore 50 where it engages the sleeve indentation 126 (Figs. 2 and 3). When the operator operates the control lever 38 to shift from neutral to forward or reverse drive, the sleeve 124 is held stationary by the engagement of the plunger 68 with the indentation 126 but the control rod 40 moves against the force of spring 114 (Fig. 3). The operator feels the resistance offered by the spring 114 and is alerted to the fact that the brakes are engaged.

The operator now decides the course of action to be taken. Normally, the operator will shift back to neutral and allow the engine to run several minutes to charge the fluid pressure system. After a few minutes, the operator again shifts gears and the system 10 responds as described above. If the brakes do not release, the operator is alerted that an inspection and possibly repair are necessary.

Occasionally, the pressure may drop below the threshold level during operation and engage the brakes 20 automatically. It is common practice to automatically shift the transmission 16 to neutral whenever the brakes 20 are applied to prevent damage to the brakes 20. In this instance, the system 10 functions as described above, that is, the plunger 68 engages the indentation 126 (Fig. 3). The tapered, first end portion 70 of the plunger 68 enables the plunger 68 to scan the surface of the sleeve 124 for the indentation 126. In this manner, the operator will always be alerted that the brakes 20 are engaged.

Other aspects, objects and advantages of the present invention will become apparent from a study of the specification, drawings and appended claims.

-13-                    0040647

Claims

1. An apparatus, comprising:
a housing (44) having an opening (50);
a control rod (40) positioned in the housing opening (50) and movable therein from a first position to at least a second position;
a sleeve (124) having an indentation (126) therein and being positioned about the control rod (40) and inside the housing (44) and movable with the control rod (40);
a plunger (68) engageable with the sleeve indentation (126), said plunger (68) blocking movement of the sleeve (124) with the control rod (40) when so engaged;
means (84) for engaging and disengaging the plunger (68); and
a single biasing element means (114) for offering noticeable resistance to movement of the control rod (40) from the first position to the second position when the plunger (68) is engaged with the sleeve indentation (126).

2. An apparatus (18), as set forth in claim 1, wherein the control rod (40) has a first shoulder (110) and a second shoulder (112) and the biasing element (114) is mounted between the first and second shoulders (110,112).

3. An apparatus (18), as set forth in claim 2, including:

a first washer (116) positioned between the biasing element (114) and the first shoulder (110);

a second washer (118) positioned between the biasing element (114) and second shoulder (112);

a first collar (120) assembly connected to the sleeve (124) and abutting the first washer (116), and

a second collar assembly (122) connected to the sleeve (124) and abutting the second washer (118), said first and second collar assemblies (120,122) remaining stationary during movement of the control rod (40) against the force of the biasing element (114) from the first position to the second position while the plunger (68) engages the indentation (126).

4. An apparatus, as set forth in claim 1, wherein the single biasing element (114) is a spring (114) coiled about the control rod (40) inside the sleeve (124).

5. An apparatus, as set forth in claim 1, wherein the housing (44) has a bore (46) and the means (84) for engaging and disengaging the plunger (68) includes:

a piston (52) slidably movable in the bore (46) from a first position to a second position;

a fluid passageway (64) leading to the piston (52), said piston (52) moving from the first position to the second position in response to fluid pressure in the fluid passageway (64) exceeding a preselected magnitude;

said plunger (68) having an end portion (70) and being linked to the piston (52) and movable from a first position at which the end portion (70) of the plunger (68) engages the sleeve indentation (126) and a

(Claim 5 continued) second postion at which the end portion (70) of the plunger (68) is free from engagement with the sleeve indentation (126); said plunger (68) being at the first position when the piston (52) is at the first postion and at the second position when the piston (52) is at the second position.

6. An apparatus (18), as set forth in claim 5, including:

a rigid bar (86) having a first end portion (88), a middle portion (90), and a second end portion (92), said piston (52) being engageable with the middle portion (90) of the bar (86), said plunger (68) being pivotally connected to the second end portion (92) of the bar (86), and said first end portion (88) being pivotally connected to the housing (44).

7. An apparatus, as set forth in claim 4, including means (62,82) for biasing the piston (52) towards the first position.

8. An apparatus, as set forth in claim 4, including means (82) for biasing the plunger (68) and piston (52) towards their first positions.

0040647

9. An apparatus (10) for a vehicle having a transmission (16) and a brake system (14) having a parking brake (20) which is released in response to receiving fluid at a preselected threshold pressure and a source (36) of pressurized fluid, comprising:

a housing (44) having an opening (50);

a transmission control rod (40) connected to the transmission (16) and positioned in the housing opening (50) and movable therein from a first position at which the transmission (16) is in neutral to at least a second position at which the transmission (16) is engaged in forward or reverse drive;

a sleeve (124) having an indentation (126) therein and being positioned about the control rod (40) and inside the housing (44) and movable with the control rod (40);

a plunger (68) engageable with the sleeve indentation (126), said plunger (68) blocking movement of the sleeve (124) with the control rod (40) when so engaged;

means (84), operatively connected to the parking brake (20) and plunger (68), for engaging the plunger (68) in response to the fluid pressure being below the threshold pressure and disengaging the plunger (68) in response to the fluid pressure reaching the threshold pressure; and

a single biasing element means (114) for offering noticeable resistance to movement of the control rod (40) when the plunger (68) is engaged with the sleeve indentation (126).

10. An apparatus (10) for a vehicle having a transmission (16) and a brake system (14) having a parking brake (20) which is released in response to receiving fluid at a preselected pressure and a source (36) of pressurized fluid, comprising:

a housing (44) having a first bore (46), a second bore (48), and a third bore (50);

a piston (52) slidably movable in the first bore (46) from a first position to a second position;

a fluid passageway (54) leading from the fluid source (26) and parking brake (20) to the piston (52), said piston (52) moving from the first position to the second position in response to fluid pressure in the fluid passageway (64) exceeding a preselected magnitude;

a plunger (68) having an end portion (70) and being movable in the second bore (48) from a first position at which the end portion (70) of the plunger (52) is urged toward the third bore (50) and second position at which the end portion (70) of the plunger (52) is urged from the third bore (50);

a linkage assembly (84) linking the piston (52) and the plunger (68) and facilitating movement of the plunger (68) to the first position in response to the piston (52) being at the first position and facilitating movement of the plunger (68) to the second position in response to the piston (52) being at the second position;

a transmission control rod (40) positioned in the third bore (50) and movable from a first position at which the transmission (16) is in one gear to at least a second position at which the transmission (16) is in another different gear;

a spring (114) coiled about the control rod (40); and

0040647

(Claim 10 continued)

a sleeve (124) having an indentation (126) therein and being positioned about the control rod (40) and inside the third bore (50), said plunger (68) engaging said indentation (126) at the first position of said plunger (68), said plunger (68) preventing movement of said sleeve (124) with said control rod (40) when said plunger (68) is engaged with said indentation (126), said sleeve (124) moving with said control rod (40) when said plunger (68) is at the second position, said control rod (40) moving against the force of said spring (114) when said plunger (68) is engaged with said indentation (126).

# FIG.I.

FIG.2.

0040647

## FIG.3.

| DOCUMENTS CONSIDERED TO·BE RELEVANT | | | CLASSIFICATION OF THE APPLICATION (Int. Cl.³) |
|---|---|---|---|
| Category | Citation of document with indication, where appropriate, of relevant passages | Relevant to claim | |
| P,A | US - A - 4 227 598 (LUFT) -- | | B 60 K 41/26 <br> B 60 T 11/10 |
| A | US - A - 4 096 930 (VISCARDI) -- | | |
| D,A | US - A - 3 972 398 (CHAMBERLAIN) -- | | |
| D | US - A - 3 978 946 (REAM) ---- | | |

**TECHNICAL FIELDS SEARCHED (Int. Cl.³)**

B 60 K 41/00

B 60 T 11/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 17-08-1981 | LUDWIG |

EPO Form 1503.1 06.78